# EUROPÄISCHE PATENTSCHRIFT

(11) **EP 1 943 129 B1**
(45) Veröffentlichungstag und Bekanntmachung des Hinweises auf die Patenterteilung: **23.09.2009**
(21) Anmeldenummer: 06806805.5
(22) Anmeldetag: 25.09.2006
(51) Int. Cl.: B60S 1/08

(54) **SCHEIBENWISCHANLAGE MIT EINER IM RUHEZUSTAND EINES WISCHERANTRIEBS WIRKSAMEN SELBSTHEMMUNG**
WINDSHIELD WIPER SYSTEM WITH A SELF-LOCKING DEVICE THAT IS ACTIVE WHEN THE WIPER DRIVE IS IN A NON-OPERATING STATE
INSTALLATION D'ESSUIE-GLACE EQUIPEE D'UN SYSTEME DE BLOCAGE AUTOMATIQUE QUI EST ACTIF LORSQUE L'ENTRAINEMENT DE L'ESSUIE-GLACE EST A L'ETAT DE REPOS

(30) Priorität: 24.10.2005 DE 102005050774
(43) Veröffentlichungstag der Anmeldung: 16.07.2008
(73) Patentinhaber: ROBERT BOSCH GMBH, 70442 Stuttgart (DE)
(72) Erfinder: TISCH, Florian, 77871 Renchen-Ulm (DE); KARCHER, Hubertus, 77815 Buehl (DE)
(86) Internationale Anmeldenummer: PCT/EP2006/066692
(87) Internationale Veröffentlichungsnummer: WO 2007/048668

(56) Entgegenhaltungen:
- EP-A2- 1 375 271
- DE-A1- 4 417 371
- FR-A- 2 852 904
- US-A- 5 539 269

## Beschreibung

Die Erfindung betrifft eine Scheibenwischanlage für ein Kraftfahrzeug, mit mindestens einem Wischer, einem Antrieb, einer im Ruhezustand des Antriebs wirksamen, einer Positionsänderung des Wischers entgegenwirkenden Selbsthemmung, und mit einer den Antrieb ansteuernden elektronischen Steuerung, die den Eingang von Positionssensorsignalen des Wischers erfasst.

### Stand der Technik

Eine derartige Wischanlage mit Mitteln zur Hemmung des Wischerantriebs im Ruhezustand ist bereits aus der DE 103 12 982 A1 bekannt. Eine gattungsgemäße Scheibenwischanlage ist aus dem Dokument US-A-5539269 bekannt.

Es sind seit langem Scheibenwischer-Antriebsvorrichtungen bekannt, bei denen eine Drehbewegung eines in eine vorgegebene Richtung rotierenden Motors durch einen Exzenter-Mechanismus, insbesondere ein Kurbelgetriebe, in eine Hin- und Herbewegung des Scheibenwischers umgesetzt wird. Die Abtriebswellen derartiger Antriebe sind also indirekt, über eine Kurbel und ein Schubgestänge, mit den Wischerwellen verbunden, an denen Wischarme mit Wischblättern befestigt sind. Aufgrund der ungleichförmigen Übersetzung des Kurbelgetriebes, die in Deck- bzw. Strecklage minimal ist, ergibt sich in diesen Lagen umgekehrt eine maximale, also ein erhebliches Drehmoment erfordernde Übersetzung bezüglich einer Drehbewegung, die vom Wischarm ausgeht und sich auf die Abtriebswelle überträgt. Da die Wischarme bei derartigen Standardwischantrieben in der Park- bzw. Ruhelage in Strecklage des Wischergestänges angeordnet sind, ergibt sich aufgrund dieser sehr hohen Übersetzung im Rahmen der üblichen, indirekten.Bewegungsübertragung ohne weitere Maßnahmen eine mechanische, über das Wischergestänge realisierte Selbsthemmung bezüglich einer umgekehrten Bewegungsübertragung vom Wischarm zum Motor.

Im Ruhezustand des Antriebs wirkt die Selbsthemmung im Falle eines durch äußere Einwirkung auf einen in der Ruheposition befindlichen Wischer wirkenden Drehmoments einer Positionsänderung des Wischers entgegen. Dies ist erwünscht, da die Ankerwelle des Wischermotors im Ruhezustand nicht bestromt ist und damit ohne ausreichende Selbsthemmung frei drehbar wäre, wobei die Gefahr besteht, dass der Wischer z. B. durch den Fahrtwind in das Wischfeld bewegt wird.

Bei neueren Wischanlagen werden zunehmend auch Antriebe mit reversierenden Elektromotoren eingesetzt, bei denen der Motor in unterschiedlichen Drehrichtungen entsprechend der Hin- und Herbewegung des Wischers gesteuert wird. Dabei ist es erforderlich, eine elektronische Steuerung vorzusehen, die bei eingeschaltetem Wischer den Eingang von Positionssensorsignalen erfasst, um zum richtigen Zeitpunkt die Drehrichtung des Motors umschalten zu können. Derartige Reversiermotoren ermöglichen einen flexibleren mechanischen Aufbau der Wischanlage und eine erweiterte Funktionalität, beispielsweise eine erweiterte Parklage. Dabei wird der Wischer nicht in der unteren Umkehrlage, sondern tiefer, also außerhalb des Sichtbereichs abgelegt. Problematisch ist hierbei die mit der neuen Ruhelage verbundene leichte Abweichung des Wischergestänges von der Strecklage, die zu einer zu geringen Selbsthemmung des Antriebs führen kann.

Besonders problematisch hinsichtlich einer Selbsthemmung ist eine vielfach gewünschte Variante des Reversierantriebs, der so genannte Wischerdirektantrieb. Dabei ist die Abtriebswelle des Schneckenrades des Antriebs, direkt oder über ein gleichförmig übersetzendes Getriebe, mit einem Wischerarm verbunden. Da durch den Wegfall des Kurbelgetriebes auch die durch das Kurbelgetriebe verursachte Selbsthemmung wegfällt, wird in der gattungsgemäßen DE 103 12 982 A1 vorgeschlagen, im Antrieb ein zusätzliches Energiespeichermittel, insbesondere eine Spiralfeder, vorzusehen, um auf diese Weise eine Selbsthemmung zu erzeugen.

Nichtkonventionelle mechanische Selbsthemm-Maßnahmen wie Spiralfedern oder Blockierelemente sind jedoch relativ aufwändig und auf die jeweilige Wischanlagenausführung abzustimmen. Ein völliger Wegfall von Selbsthemm-Maßnahmen ist jedoch auch nicht möglich, da ansonsten, wie oben bereits erwähnt, der oder die Wischarme durch Missbrauch oder andere äußere Einwirkungen (z. B. Waschstraße) aus der Parkposition in das Wischfeld geraten können.

### Vorteile der Erfindung

Erfindungsgemäß ist eine elektronisch implementierte Selbsthemmung vorgesehen, so dass es möglich ist, auf mechanische Selbsthemm-Maßnahmen bei Wischerantrieben zu verzichten. Der Erfindung liegt weiter der Gedanke zugrunde, dass der Anforderung an eine Selbsthemmung, nämlich einem das Fahrersichtfeld beeinträchtigenden Verdrehen des Wischers in das Sichtfeld hinein entgegenzuwirken, bereits dann entsprochen werden kann, wenn der Wischer so zeitnah nach dem Verdrehen wieder zurückgedreht wird, dass eine Störung der Sichtverhältnisse praktisch nicht eintritt. Erfindungsgemäß überwacht die Steuerung den Wischer während des Ruhezustands des Antriebs durch Auswertung der Positionssensorsignale auf eine Positionsänderung hin. Beim Ansprechen der Positions-Überwachung steuert die Steuerung den Antrieb an, um den Wischer in eine Sollposition zurückzudrehen. Die erfindungsgemäße Selbsthemmung kann bei allen Wischanlagen mit elektronischer Wischermotor-Ansteuerung zum Einsatz kommen.

Durch die in den Unteransprüchen aufgeführten Maßnahmen ergeben sich vorteilhafte Weiterbildungen und Verbesserungen der im Hauptanspruch angegebenen Merkmale.

Als besonders vorteilhaft wird eine Weiterbildung angesehen, die es ermöglicht, dass die elektronische Selbsthemmung, die naturgemäß auf eine Stromversorgung angewiesen ist, dabei jedoch die Fahrzeugbatterie möglichst schonen soll, auch bei abgeschalteter Zündung, etwa in einer Waschstraße, wirkt. Dazu ist die Steuerung als intern weckfähige Elektronik ausgebildet, die bei ausgeschalteter Zündung des Kraftfahrzeugs an die Fahrzeugbatterie angeschlossen und in einem Stand-by-Zustand ohne wirksame elektronische Selbsthemmung ist, wobei sich die Steuerung im Stand-by-Zustand zyklisch selbst weckt, jeweils für eine Wachphase einen Betriebszustand mit wirksamer elektronischer Selbsthemmung annimmt und sich wieder in den Stand-by-Zustand versetzt. Auf diese Weise wird einer zuvor eingetretenen öder während der andauernden Wachphase eintretenden Positionsänderung des Wischers entgegengewirkt.

Dabei ist es zur Schonung der Fahrzeugbatterie bei gleichzeitig in der Praxis ausreichender Dichte der Überwachung vorteilhaft, dass sich die Steuerung zyklisch in Zeitabständen in der Größenordnung von einer Sekunde selbst weckt. Wenn kein Ansprechen der Positions-Überwachung erfolgt, kann die Wachphase nur etwa 10 ms dauern. Dabei ist es weiterhin von Vorteil, wenn das Ansprechen der Positions-Überwachung nur bei Überschreiten eines vorgebbaren Schwellwertes der Positionsänderung zu einer Rückregelung des Wischers in die Sollposition führt. Vorteilhafterweise beträgt dieser Schwellwert der Positionsänderung etwa 3% des maximalen Wischwinkels.

Da die elektronische Selbsthemmung kein Kurbelgetriebe voraussetzt, kann sie auch bei Wischerdirektantrieben eine ausreichende Selbsthemmung gewährleisten, d. h. in Fällen, in denen der Antrieb mindestens einen Reversiermotor mit einer Abtriebswelle aufweist, wobei die Abtriebswelle direkt oder über ein gleichförmig übersetzendes Getriebe mit einem Wischerarm des Wischers verbunden ist.

### Zeichnungen

Ein Ausführungsbeispiel der Erfindung ist in den Figuren dargestellt und in der nachfolgenden Beschreibung näher erläutert. Es zeigen:
Figur 1 eine erfindungsgemäße Wischanlage mit einem in der Steuerung implementierten Selbsthemm-Algorithmus und
Figur 2 ein Flussdiagramm zur Erläuterung des Selbsthemm-Algorithmus der Wischanlage bei ausgeschalteter Zündung des Kraftfahrzeugs..

### Beschreibung des Ausführungsbeispiels

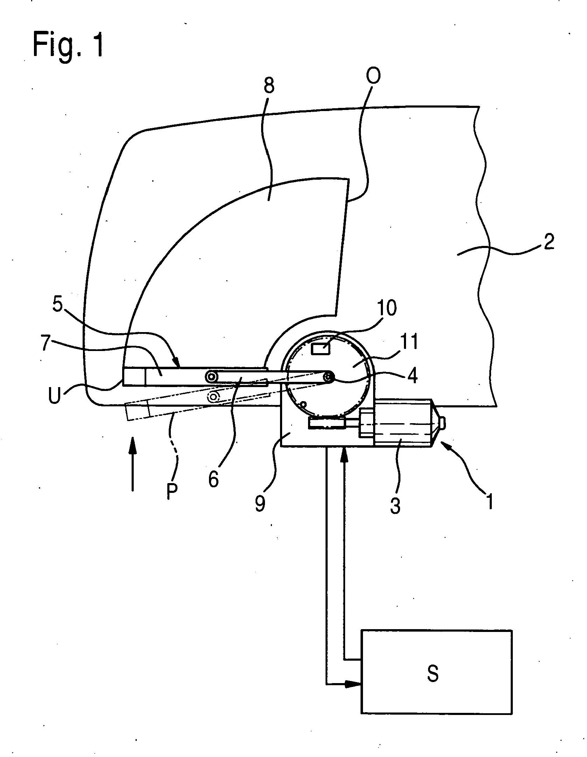

Figur 1 zeigt eine schematische Darstellung einer erfindungsgemäßen Scheibenwischvorrichtung auf einer Scheibe 2 eines Kraftfahrzeugs. Die Scheibe 2 ist hier der Übersichtlichkeit halber nur zur Hälfte dargestellt. Die Wischanlage umfasst einen Antrieb 1 mit einem Reversiermotor 3, der eine Abtriebswelle 4 antreibt, mit der drehfest ein Wischer 5 verbunden ist. Der Wischer 5 umfasst im Wesentlichen einen Wischerarm 6, an dessen freien Ende ein Wischblatt 7 angelenkt ist. Im Betrieb vollführt die Abtriebswelle 4 eine pendelnde Bewegung, so dass der Wischer 5 sich pendelnd über die Scheibe 2 bewegt. Der vom Wischblatt 7 überstrichene Bereich auf der Scheibe 2 bildet hierbei das Wischfeld 8.

Der Wischer 5 pendelt bei einer Bestromung des Reversiermotors 3 zwischen der unteren Umkehrlage U und einer oberen Umkehrlage O. Angedeutet in Figur 1 ist auch eine erweiterte Parklage P, in der sich der Wischer im Ruhezustand befindet. Fährt das Fahrzeug, so wirkt der Fahrtwind auf den Wischer 5 und drückt ihn - aufgrund der Neigung der Scheibe 2 - nach oben. Diese Luftströmung ist durch einen Strömungspfeil angedeutet. Dadurch wirkt auf die Abtriebswelle 4 ein Drehmoment. Ist der Reversiermotor 3 nicht bestromt, so wandert der Wischer 5 nach oben in das Wischfeld 8, da ohne mechanische Selbsthemmung dem durch den Fahrtwind oder eine andere äußere Ursache erzeugten Drehmoment kein eine Drehung von Anfang an verhinderndes Drehmoment entgegenwirkt. Dieser Effekt ist unerwünscht, da der Wischer 5 dadurch in das Sichtfeld des Fahrers gerät.

Die elektronische Steuerung S der Wischanlage kann z. B. auf der Innenseite des Gehäusedeckels 9 des Antriebs 1 angeordnet sein. Ein Positionssensor 10 kann beispielsweise auf dem Schneckenrad 11 angeordnet sein, um die Position des Schneckenrads 11 und damit des Wischers 5 zu erfassen.

Die zur Durchführung des Selbsthemm-Algorithmus erforderlichen Voraussetzungen stimmen im Wesentlichen mit den für die elektronische Ansteuerung des Reversiermotors 3 erforderlichen Voraussetzungen überein. Vorteilhaft einsetzbar ist eine mikrocontrollergesteuerte Elektronik zur Erfassung von Signaleingängen, z. B. LIN-Bus (Local Interconnect Network), zur Erfassung der Positions- oder Lagesensorsignale und zur Ansteuerung einer Leistungsendstufe (z. B. H-Brückenschaltung).

Als weitere Voraussetzung für eine wirksame elektronische Selbsthemmung muss der Wischermotor bzw. die Elektronik ständig mit Spannung versorgt werden. Dazu wird eine intern weckfähige Elektronik (Controller in Stand-by-Modus) zur Reduzierung der Stromaufnahme im Ruhezustand des Systems, also bei abgeschalteter Zündung, eingesetzt. Dabei wird in an sich bekannter Weise ein Teil der Steuerungselektronik S, die Aufweck-Schaltung, auch im Stand-by-Modus mit Spannung aus der Fahrzeugbatterie versorgt, während die mehr Energie verbrauchenden Teile, wie die Überwachung des Positionssensorsignals und die Ansteuerschaltung, in einen Schlafzustand versetzt sind.

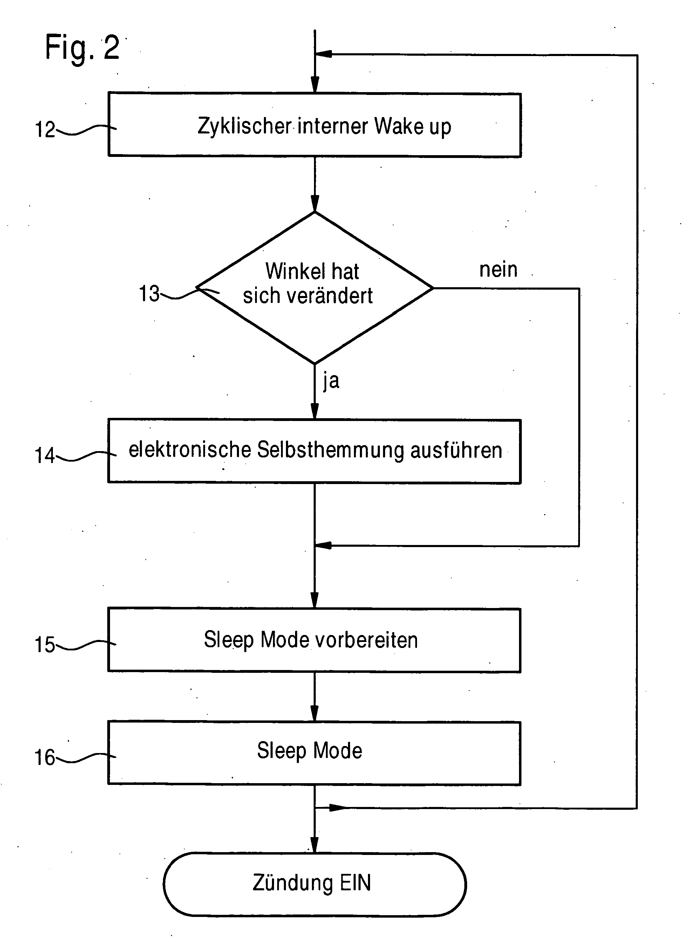

Das in Figur 2 dargestellte Flussdiagramm geht von einer ausgeschalteten Zündung des Kraftfahrzeugs aus, aufgrund dessen sich die elektronische Steuerung S in einen energiesparenden Schlafmodus versetzt hat, in dem wesentliche Teile der Steuerung S, insbesondere des Mikrocontrollers, abgeschaltet beziehungsweise in einen reduzierten Betriebszustand versetzt sind. Gemäß dem folgenden Programmschritt 12 versetzt sich die Steuerung S durch ein mittels der Aufweck-Schaltung erfolgendes zyklisches internes Aufwecken für die Dauer einer Wachphase in den vollen Betriebszustand. Die Zeitabstände zwischen den Wachphasen können beispielsweise etwa eine Sekunde betragen.

Gemäß dem folgenden Programmschritt 13 überprüft die Steuerung S in dieser beispielsweise 10 ms dauernden Wachphase, ob eine Positionsänderung, also eine Änderung des Wischwinkels des Wischers 5 gegenüber der Sollposition gegeben ist. Diese Änderung kann bereits vor Beginn der Wachphase eingetreten sein oder während der Wachphase eintreten. Abhängig vom Ergebnis der Positions-Überprüfung 13 erfolgt eine Verzweigung im Programmablauf des elektronischen Selbsthemm-Algorithmus.

Falls eine Positionsänderung festgestellt wird, wird durch eine im Mikrocontroller implementierte Lageregelung auf die Sollposition zurück positioniert. Dieser Schritt 14 ist die elektronische Selbsthemmung im engeren Sinn. Die Ausführung dieses Schrittes 14 kann ohne Weiteres durch die Einführung eines Schwellwerts, also durch Vorgabe einer Mindest-Positionsänderung, modifiziert werden. Dieser Schwellwert der Positionsänderung kann etwa 3% des maximalen Wischwinkels betragen. Nach erfolgtem Zurückdrehen des Wischers 5 in die Sollposition bereitet die Steuerung S im nächsten Programmschritt 15 die Rückkehr in den Schlafmodus vor. Im darauf folgenden Programmschritt 16 nimmt die Steuerung S den Schlafmodus an, wobei der Programmablauf gemäß dem beschrieben Algorithmus zyklisch so lange wiederholt wird, bis der Programmablauf durch Einschalten der Zündung endet. Bei eingeschalteter Zündung findet dann, da genügend Energie zur Verfügung steht, abweichend vom Algorithmus gemäß Figur 2, eine kontinuierliche Überwachung bzw. Selbsthemmung des Wischer 5 statt.

Falls im Programmschritt 13 keine Positionsänderung festgestellt wird, erfolgt keine Rückregelung gemäß Schritt 14, sondern, am Ende der normalen Wachphase, der Übergang in den Schlafmodus gemäß den Programmschritten 15 und 16.

## Patentansprüche

1. Scheibenwischanlage für ein Kraftfahrzeug, mit mindestens einem Wischer (5), einem Antrieb (1), einer im Ruhezustand des Antriebs (1) wirksamen, einer Positionsänderung des Wischers (5) entgegenwirkenden Selbsthemmung, und mit einer den Antrieb (1) ansteuernden elektronischen Steuerung (S), die den Eingang von Positionssensorsignalen des Wischers (5) erfasst,
**dadurch gekennzeichnet,**
**dass** eine elektronisch implementierte Selbsthemmung vorgesehen ist, wobei die Steuerung (S) den Wischer (5) während des Ruhezustands des Antriebs (1) durch Auswertung der Positionssensorsignale auf eine Positionsänderung hin überwacht und beim Ansprechen der Positions-Überwachung den Antrieb (1) ansteuert, um den Wischer (5) in eine Sollposition (U, P) zurückzudrehen.

2. Scheibenwischanlage nach Anspruch 1, **dadurch gekennzeichnet, dass** die Steuerung (S) als intern weckfähige Elektronik ausgebildet ist, die bei ausgeschalteter Zündung des Kraftfahrzeugs an die Fahrzeugbatterie angeschlossen und in einem Stand-by-Zustand ohne wirksame elektronische Selbsthemmung ist, wobei sich die Steuerung (S) im Stand-by-Zustand zyklisch selbst weckt, jeweils für eine Wachphase einen Betriebszustand mit wirksamer elektronischer Selbsthemmung annimmt und sich wieder in den Stand-by-Zustand versetzt.

3. Scheibenwischanlage nach Anspruch 2, **dadurch gekennzeichnet, dass** sich die Steuerung (S) zyklisch in Zeitabständen in der Größenordnung von einer Sekunde selbst weckt.

4. Scheibenwischanlage nach Anspruch 2 oder 3, **dadurch gekennzeichnet, dass** die Wachphase, wenn kein Ansprechen der Positions-Überwachung erfolgt, etwa 10 ms dauert.

5. Scheibenwischanlage nach einem der Ansprüche 1 bis 4, **dadurch gekennzeichnet, dass** das Ansprechen der Positions-Überwachung nur bei Überschreiten eines vorgebbaren Schwellwertes der Positionsänderung zu einer Rückregelung des Wischers (5) in die Sollposition (U, P) führt.

6. Scheibenwischanlage nach Anspruch 5, **dadurch gekennzeichnet, dass** der Schwellwert der Positionsänderung etwa 3% des maximalen Wischwinkels beträgt.

7. Scheibenwischanlage nach einem der Ansprüche 1 bis 6, **dadurch gekennzeichnet, dass** der Antrieb (1) mindestens einen Reversiermotor (3) mit einer Abtriebswelle (4) aufweist, und dass die Abtriebswelle (4) direkt oder über ein gleichförmig übersetzendes Getriebe mit einem Wischerarm (6) des Wischers (5) verbunden ist.

## Claims

1. Windscreen wiper system for a motor vehicle, having at least one wiper (5), a drive (1), a self-locking device which is active in the non-operating state of the drive (1) and counteracts a change in position of the wiper (5), and having an electronic controller (S) which actuates the drive (1) and senses the inputting of position sensor signals of the wiper (5),
**characterized**
**in that** an electronically implemented self-locking device is provided, wherein the controller (S) monitors the wiper (5) for a change in position during the non-operating state of the drive (1) by evaluating the position sensor signals, and when the position-monitoring means responds said controller (S) actuates the drive (1) in order to return the wiper (5) into a desired position (U, P).

2. Windscreen wiper system according to Claim 1, **characterized in that** the controller (S) is embodied as an electronic unit which can be woken up internally and which, when the ignition of the motor vehicle is switched off, is connected to the vehicle battery and is in a stand-by state without effective electronic self-locking, wherein the controller (S) wakes itself up cyclically in the stand-by state, and respectively assumes an operating state with effective electronic self-locking for an awake phase and returns to the stand-by state.

3. Windscreen wiper system according to Claim 2, **characterized in that** the controller (S) wakes itself up cyclically at time intervals of the order of magnitude of a second.

4. Windscreen wiper system according to Claim 2 or 3, **characterized in that** the awake phase lasts for approximately 10 ms if the position-monitoring system does not respond.

5. Windscreen wiper system according to one of Claims 1 to 4, **characterized in that** the response of the position-monitoring means causes the wiper (5) to be returned to the setpoint position (U, P) only if a predefinable threshold value of the change in position is exceeded.

6. Windscreen wiper system according to Claim 5, **characterized in that** the threshold value of the change in position is approximately 3% of the maximum wiping angle.

7. Windscreen wiper system according to one of Claims 1 to 6, **characterized in that** the drive (1) has a reversing motor (3) with an output shaft (4), and **in that** the output shaft (4) is connected to a wiper arm (6) of the wiper (5) directly or via a gear mechanism with a uniform transmission ratio.

## Revendications

1. Installation d'essuie-glace pour un véhicule automobile, comprenant au moins un essuie-glace (5), un entraînement (1), un auto-blocage agissant à l'état de repos de l'entraînement (1), agissant à l'encontre d'une variation de position de l'essuie-glace (5), et une commande électronique (S) commandant l'entraînement (1), qui détecte l'entrée de signaux de capteurs de position de l'essuie-glace (5),
**caractérisée en ce que**
l'on prévoit un auto-blocage à fonctionnement électronique, la commande (S) contrôlant l'essuie-glace (5) pendant l'état de repos de l'entraînement (1) par analyse des signaux de capteurs de position pour détecter une variation de position et commandant l'entraînement (1) en réponse au contrôle de position, afin de faire revenir l'essuie-glace (5) dans une position de consigne (U, P).

2. Installation d'essuie-glace selon la revendication 1, **caractérisée en ce que** la commande (S) est réalisée sous forme d'électronique réactivable en interne, qui, lorsque l'allumage du véhicule automobile est éteint, est raccordée à la batterie du véhicule, et est dans un état de veille sans auto-blocage électronique actif, la commande (S) se réactivant automatiquement cycliquement dans l'état de veille, adoptant à chaque fois pour une phase de réactivation, un état de fonctionnement avec un auto-blocage électronique actif, et se remettant à nouveau dans l'état de veille.

3. Installation d'essuie-glace selon la revendication 2, **caractérisée en ce que** la commande (S) se réactive cycliquement automatiquement à des intervalles de l'ordre d'une seconde.

4. Installation d'essuie-glace selon la revendication 2 ou 3, **caractérisée en ce que** la phase d'activation, lorsqu'aucune réaction du contrôle de position n'a lieu, dure environ 10 ms.

5. Installation d'essuie-glace selon l'une quelconque des revendications 1 à 4, **caractérisée en ce que** la réaction du contrôle de position ne conduit à une régulation en retour de l'essuie-glace (5) dans la position de consigne (U, P) que si une valeur seuil prédéterminable de variation de position est dépassée.

6. Installation d'essuie-glace selon la revendication 5, **caractérisée en ce que** la valeur seuil de variation de position vaut environ 3% de l'angle de lavage maximal.

7. Installation d'essuie-glace selon l'une quelconque des revendications 1 à 6, **caractérisée en ce que** l'entraînement (1) présente au moins un moteur réversible (3) avec un arbre de sortie (4) et **en ce que** l'arbre de sortie (4) est connecté directement ou par le biais d'une transmission à démultiplication uniforme à un bras d'essuie-glace (6) de l'essuie-glace (5).
